## Europäisches Patentamt

## European Patent Office

## Office européen des brevets

(19)

(11) Veröffentlichungsnummer: **0 208 088
B1**

(12) **EUROPÄISCHE PATENTSCHRIFT**

(45) Veröffentlichungstag der Patentschrift:
**09.08.89**

(21) Anmeldenummer: **86106481.4**

(22) Anmeldetag: **13.05.86**

(51) Int. Cl.⁴: **H02M 1/084, H02M 7/525**

(54) Vorrichtung zur Erzeugung eines symmetrischen dreiphasigen Spannungssystems mit belastbarem Null-Leiter.

(30) Priorität: **13.05.85 DE 3517175**

(43) Veröffentlichungstag der Anmeldung:
**14.01.87 Patentblatt 87/3**

(45) Bekanntmachung des Hinweises auf die Patenterteilung:
**09.08.89 Patentblatt 89/32**

(84) Benannte Vertragsstaaten:
**AT CH DE FR GB LI SE**

(56) Entgegenhaltungen:
**EP-A- 0 037 001**

(73) Patentinhaber: **Siemens Aktiengesellschaft Berlin und München, Wittelsbacherplatz 2, D-8000 München 2(DE)**

(72) Erfinder: **Forstbauer, Wilhelm, Dr., Am Europakanal 38, D-8250 Erlangen(DE)**
Erfinder: **Müller, Albert, Dipl.-Ing., Am Erlanger Weg 47c, D-8520 Erlangen(DE)**

## Beschreibung

Die Erfindung betrifft eine Vorrichtung zur Erzeugung eines symmetrischen dreiphasigen Ausgangsspannungssystems mit belastbarem Null-Leiter mit den Merkmalen des Oberbegriffs des Anspruchs 1.

In der europäischen Patentschrift 37 001 ist eine Anordnung angegeben, bei der das erzeugte dreiphasige Ausgangsspannungssystem auch bei unsymmetrischer Belastung durch eine Mittelpunktlast oder eine Einphasenlast symmetrisch gehalten werden kann. Durch geeignete Regelung ist es möglich, auch Laststöße mit Nennlast schnell (z.B. innerhalb einer Halbschwingung) auszuregeln. Auch Oberschwingungsspannungen, die von Oberschwingungsströmen niedrigerer Ordnungszahl aufgrund nichtlinearer Lasten am Innenwiderstand der verwendeten Wechselrichteranordnung erzeugt werden, können ausgeregelt werden. Außerdem ist es möglich, mit einfachen Tiefpässen den Oberschwingungsgehalt unter 5% zu halten.

Bei dieser bekannten Vorrichtung ist an eine Eingangsgleichspannung eine Wechselrichteranordnung mit drei Wechselströmausgängen angeschlossen, wobei diese Wechselrichteranordnung für jeden Wechselstromausgang eine eigene 4-pulsige Brückenschaltung (B4-Wechselrichter) enthält, insgesamt also 12 Wechselrichter-Hauptzweige. Die damit erzeugten Wechselspannungen sind an eine Spannungstransformations-Einrichtung angeschlossen, die aus drei Einphasen-Transformatoren besteht. Die Primärwicklungen der Transformatoren sind dabei an die Einphasen-Wechselspannungen der B4-Wechselrichterbrücken angeschlossen, während die Sekundärwicklungen an einem Ende zu einem belastbaren Sternpunkt zusammengeführt sind und die anderen Enden die Anschlüsse des dreiphasigen Ausgangsspannungssystems darstellen. Ferner ist ein aus Induktivitäten und Kondensatoren bestehendes Filter vorgesehen, das der Spannungstransformationseinrichtung vor- oder nachgeschaltet ist. Die einzelnen Elemente dieses mit der Spannungs-Transformationseinrichtung in Reihe geschalteten Filters können aber auch anders eingeordnet sein, z.B. können die Induktivitäten als Längsdrosseln der Spannungstransformationseinrichtung primärseitig vorgeschaltet sein, während die Kapazitäten in Stern- oder Dreieckschaltung sekundärseitig angeschlossen sein können.

Um das erzeugte Ausgangsspannungssystem mit den angegebenen Eigenschaften regeln zu können, ist ein mit Mitteln der Vektorrechnung arbeitendes Regelteil vorgesehen, bei der ein Vektoroszillator als Sollwertgeber ein dreiphasiges symmetrisches System von Referenzvektoren vorgibt. Jeder dieser Referenzvektoren wird in einer eigenen, einem Wechselstromausgang der Wechselrichteranordnung zugeordneten Regeleinrichtung mit einem entsprechenden Ist-Vektor verglichen, um damit die einzelnen B4-Brückenschaltungen anzusteuern.

Diese bekannte Anordnung ist nicht nur in ihrem Regelteil verhältnismäßig aufwendig, sie benötigt ferner insgesamt 12 Wechselrichter-Hauptzweige.

Aufgabe der Erfindung ist es, diese Vorrichtung insbesondere im Hinblick auf den Leistungsteil zu verbessern, wobei die erwähnten günstigen Eigenschaften erhalten bleiben sollen und insbesondere eine rasche und genaue Regelung des symmetrischen Ausgangsspannungssystems möglich sein soll.

Diese Aufgabe wird gelöst durch die Merkmale des Anspruchs 1. Vorteilhafte Weiterbildungen der Erfindung sind in den Unteransprüchen angegeben.

Anhand von 10 Figuren wird die Erfindung näher erläutert. Es zeigen:

Fig. 1 den Leistungsteil der Vorrichtung mit einer ersten Ausführungsform seines Regelteils,

Fig. 2 einen Aufbau der Spannungstransformationseinrichtung mit einem Transformator in Dreieck/Stern-Schaltung und einem Filter,

Fig. 3 erläutert die Struktur der Anordnung nach Fig.2 und ihre Nachbildung in einem Entkopplungsnetzwerk,

Fig. 4 und Fig. 5 die in verschiedenen Spannungsebenen auftretenden Spannungen bei symmetrischer und unsymmetrischer Last,

Fig. 6 ein Blockdiagramm des dreiphasigen Regelkreises,

Fig. 7, Figur 8, Figur 9 verschiedene Ausführungen für die einphasigen Regelkreise im Blockdiagramm,

Fig. 10 und Fig. 11 einen vorteilhaften Aufbau des Regelteils für den in Fig. 1 gezeigten Leistungsteil.

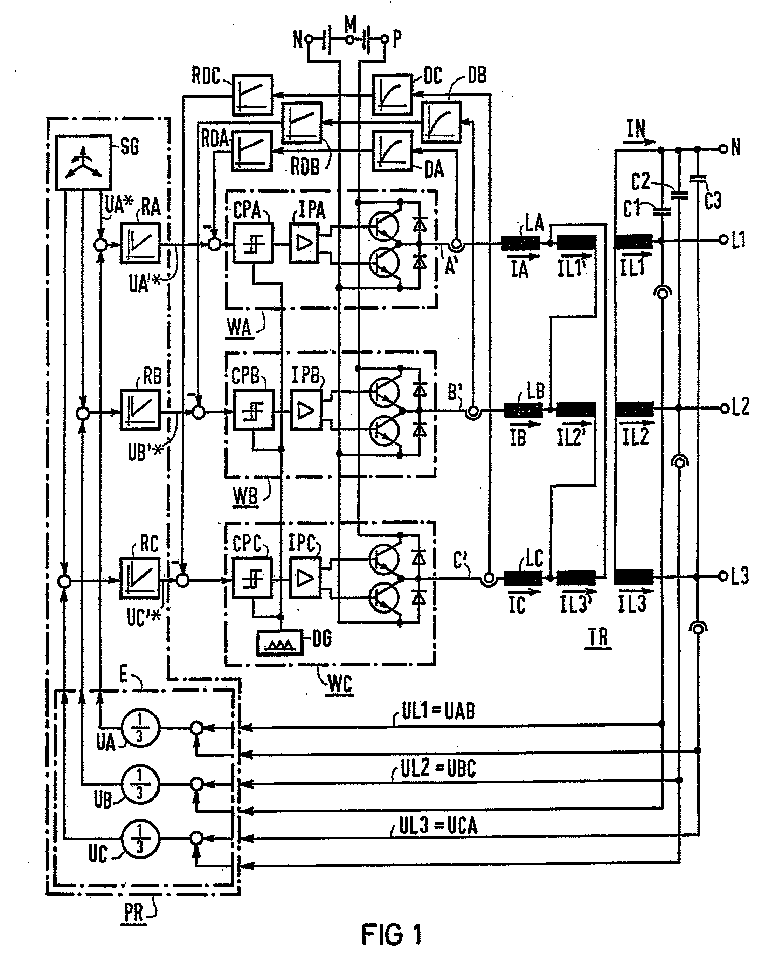

In Fig. 1 sind mit L1, L2, L3 die Ausgangsklemmen angegeben, an denen die gegenüber dem belastbaren Null-Leiter (Sternpunkt N) erfaßbaren Leiterspannungen UL1, UL2, UL3 anliegen. Der Null-Leiter N ist am Sternpunkt der sekundärseitigen Wicklung eines Drehstromtransformators abgegriffen, dessen Primärwicklungen im Dreieck geschaltet sind. Ist keine Potentialtrennung erforderlich, so kann auch ein herkömmlicher Sternpunktbildner verwendet werden, es sind aber auch andere Spannungstransformationseinrichtungen (z.B. ein Drehstromtransformator mit primärseitiger Sternschaltung ohne angeschlossenen Sternpunkt) möglich.

Mit LA, LB und LC sind die Induktivitäten und mit C1, C2, C3 die Kapazitäten eines Filters bezeichnet, wobei im vorliegenden bevorzugten Fall die Induktivitäten den Primärwicklungen der Spannungstransformationseinrichtung TR vorgeschaltet sind. Die Kapazitäten, die bevorzugt an den Sekundärwicklungen angeschlossen sind, können anstelle der gezeigten Sternschaltung auch in Dreieckschaltung jeweils zwischen die einzelnen Klemmen des Ausgangsspannungssystems angeordnet sein.

Als Wechselrichteranordnung WA, WB, WC zur Speisung der Spannungstransformationseinrichtung TR sind nun nicht jeweils B4-Brückenschaltungen vorgesehen, vielmehr arbeiten nur jeweils 2 Brückenzweige auf einen primärseitigen Wechselspannungsanschluß A', B', C' der Transformationseinrichtung TR bzw. der vorgeschalteten Filterelemente. Diese beiden Brückenzweige sind so gesteuert, daß sie den zugeordneten Wechselspannungsausgang in einem hochfrequenten, vorzugsweise konstanten Takt alternierend auf die Eingangsklemmen P, N der Eingangsgleichspannung schalten, der in Fig. 1 ein fiktiver Spannungsnullpunkt M zugeordnet ist.

Zur Bildung der alternierenden Ansteuerimpulse für die Brückenzweige erzeugt ein Dreiecksgenerator DG eine hochfrequente Tastspannung, die jeweils einem eigenen Steuersatz für jedes Paar auf einen gemeinsamen Wechselspannungsausgang arbeitender Brückenzweige zugeführt ist. In diesen Steuersätzen, die im Blockschaltbild als Komparatoren CPA, CPB, CPC dargestellt sind, wird jeweils eine den Ausgängen A', B', C' zugeordnete Steuerspannung UA'*, UB'*, UC'* mit der Tastspannung pulsbreitenmoduliert. Die pulsbreitenmodulierte Steuerspannung wird dann jeweils in einer Impulsauswertung IPA, IPB, IPC, die im Blockdiagramm als Verstärker dargestellt sind, in die entsprechenden Zündimpulse für die alternierende Ansteuerung der Brückenzweige umgesetzt.

Um eine Sättigung des Transformators zu vermeiden, ist ferner vorgesehen, an den Anschlüssen A', B', C' auftretende Gleichanteile auszuregeln. Deshalb sind dort Gleichanteils-Erfassungseinrichtungen DA, DB, DC vorgesehen, denen jeweils ein Gleichanteilsregler RDA, RDB, RDC nachgeschaltet ist, dessen Ausgangssignal jeweils der Steuerspannung UA'*, UB'*, UC'* am Eingang der Komparatoren überlagert wird.

Der Aufbau der Wechselrichteranordnung aus drei, jeweils einem Anschluß A', B', C' zugeordneten Paaren von Brückenzweigen entspricht dem normalen Aufbau eines Pulswechselrichters. Um an den Klemmen L1, L2, L3 auftretende momentane Unymmetrien rasch auszuregeln, ist wesentlich, daß jedes Paar dieser Brückenzweige von einem eigenen Steuersatz in der Art eines unsymmetrischen Spannungssystems mit einer Steuerspannung angesteuert wird, die rasch verändert wird. Hierzu dient der Regelteil PR, der in Figur 1 nur schematisch angedeutet ist und dessen vorteilhafter Aufbau anhand der weiteren Figuren erläutert werden wird.

Gegenüber der eingangs erwähnten bekannten Vorrichtung ergibt sich im Leistungsteil eine Halbierung der benötigten Brückenzweige und somit eine erhebliche Einsparung. Die bekannte, aus drei B4-Einzelwechselrichtern bestehende Wechselrichteranordnung durch einen derartigen B6-Pulsumrichter zu ersetzen, erscheint jedoch zunächst nicht möglich.

Ein derartiger Pulswechselrichter hat nämlich keinen belastbaren Sternpunkt an seinem Ausgang und liefert somit nur ein System von Strömen, das keine Nullkomponente aufweist. Für seine Ausgangsströme IA, IB, IC gilt also (IA + IB + IC) = 0, so daß das den Transformator TR speisende Stromsystem nur zwei Freiheitsgrade aufweist. Liegt an den Ausgängen der gesamten Vorrichtung ein symmetrisches Spannungssystem an, so heben sich zwar die über die Kondensatoren C1, C2, C3 fließenden Ströme gegenseitig auf, jedoch bewirkt eine Last, die z.B. nur zwischen zwei Klemmen oder zwischen einer Klemme und dem Null-Leiter N angeschlossen wird, daß den einzelnen Primärwicklungen unterschiedliche Ströme IL1, IL2, IL3 entnommen werden, wobei im Null-Leiter N ein Strom IN = -(IL1 + IL2 + IL3) fließen kann. Das System der Ausgangsströme besitzt also drei Freiheitsgrade und die unterschiedlichen Sekundärströme bewirken, daß auch die Primärwicklungen und somit die Ausgänge A', B', und C' in einer Weise unsymmetrisch belastet werden, die von der momentanen Größe und Anordnung der Last abhängt. Das an den Leitern L1, L2, L3, N anliegende Spannungssystem besitzt an sich ebenfalls drei Freiheitsgrade und somit drei Istwert, die sich entsprechend den momentanen Parametern der Last und den der Transformationseinrichtung entnommenen Ströme frei einstellen können und auf Istwerte für die Leiterspannungen (Spannungen zwischen jeweils einem Leiter L1, L2, L3 und dem Nulleiter N) zurückführen lassen. Das angestrebte symmetrische Spannungssystem besitzt aber nur zwei Freiheitsgrade. Daher müssen die beiden Freiheitsgrade der Primärströme so vorgegeben werden, daß sich die drei Freiheitsgrade der Sekundärströme gerade so einstellen, daß in dem Ausgangsspannungssystem der dritte Freiheitsgrad unter Berücksichtigung der momentanen Lastparameter ausgeregelt wird.

Da aber diese Parameter sich willkürlich ändern können, erscheint es zunächst so, daß Verzerrungen im angestrebten symmetrischen Ausgangsspannungssystem von der Wechselrichteranordnung höchstens dann unterdrückt werden können, wenn eine entsprechende Information über den momentanen Lastzustand vorhanden wäre. Da außerdem jede Änderung eines der Sekundärströme IL1, IL2, IL3 mit einer Änderung der in den Primärwicklungen fließenden verketteten Ströme IAB, IBC, ICA und somit eine Änderung in mehreren der speisenden Ströme IA, IB, IC verbunden ist, ist zunächst auch vollkommen unklar, wie eine Information über den Lastzustand, falls sie vorhanden wäre, in der Steuerung der drei Brückenzweig-Paare zu verarbeiten wäre.

Die Erfindung kommt nun praktisch ohne die erwähnte Information über den momentanen exakten Lastzustand aus. Gemäß Fig. 1 wird lediglich das Spannungssystem an den Klemmen L1, L2, L3 erfaßt, das auch bei sich ändernder und unsymmetrischer Last symmetrisch gehalten werden soll.

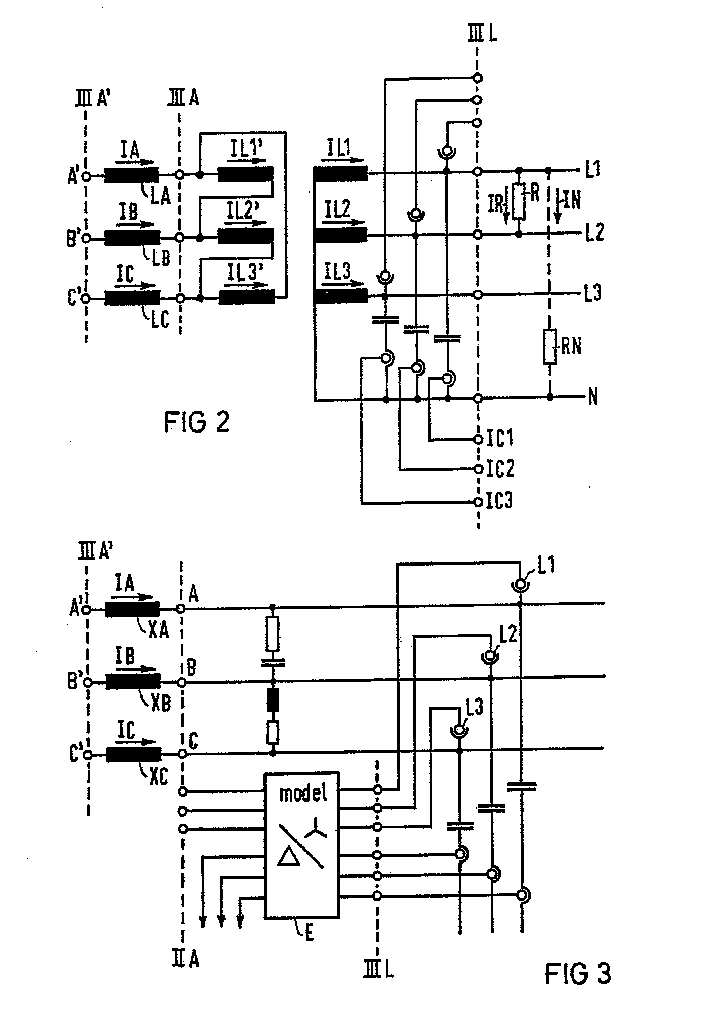

Im Interesse einer schnellen Nachstellung dieser Klemmenspannungen kann es erforderlich sein, auch den durch die Kondensatoren des Filters fließenden Strom zu erfassen. Die im Prinzip entbehrlichen und nur für eine Weiterbildung der Erfindung vorgesehenen Strommeßglieder sind daher nicht in Fig. 1, der Vollständigkeit wegen aber in der Fig. 2 dargestellt, die den Aufbau des Filters und der z.B. als Transformator in Dreieck/Stern-Schaltung ausgebildeten Transformationseinrichtung wiedergibt. Für die weitere Erläuterung der Erfindung sind jedoch diese kapazitiven Ströme und die Kapazitäten selbst nicht von Bedeutung, so daß sie zunächst nicht weiter betrachtet werden.

Ist nämlich z.B. zwischen L1 und N eine Last RN ("Mittelpunktslast", Fig. 2) angeschlossen, so ist der Laststrom IN gleich dem Strom im Null-Leiter und wird als Sekundärstrom IL1 an den Kapazitäten

vorbeigeleitet, wenn bei erfolgreicher Steuerung das Ausgangsspannungssystem symmetrisch bleibt. Da im Fall dieser Nullpunktlast $IL2 = IL3 = 0$ gilt, wird der Sekundärstrom $IL1$ durch einen Primärstrom $IL1'$ erzeugt, der gemäß $IL2' = IL3' = 0$ als verketteter Strom $IAB = IA = -IB$ an den Ausgängen A', B' der Wechselrichteranordnung zur Verfügung gestellt werden muß.

Ist dagegen zwischen die Klemmen L1, L2 eine Einphasenlast R geschaltet, so gilt $IL3 = 0$, $IL1 = IR = -IL2$ und die Ströme lassen sich unter Berücksichtigung des Windungsverhältnisses des Transformators in entsprechende Primärströme $IL3' = 0$, $IL1' = IA$, $IL2' = -IC$ mit $IB = -IA - IC$ umrechnen.

Addiert man die Impedanzen des Transformators und damit die an seinen primären Klemmen hervorgerufenen Spannungsabfälle zu den Impedanzen LA, LB, LC des Filters und seinen Spannungsabfällen, so gelangt man zu dem in Fig. 3 gezeigten Ersatzschaltbild für den Fall der Einphasenlast, bei dem die sekundärseitig verkettet geschaltete Last R zwischen den Anschlüssen A, B, C als RC- und RL-Glied auftritt.

Auch eine sekundärseitige Mittelpunktlast wirkt dabei primärseitig wie eine Last zwischen zwei Phasen. Entsprechend können auch die Leiterspannungen UL1, UL2, UL3 an den Anschlüssen L1, L2 und L3 in entsprechende verkettete Spannungen UAB, UBC, UCA zwischen den Anschlüssen A, B und C umgerechnet werden.

Diese Umrechnung geschieht in Fig. 3 durch ein als "model" bezeichnetes Bauteil E, das somit die Struktur der Transformationseinrichtung nachbildet, d.h. den funktionellen Zusammenhang zwischen den Ausgangsgrößen der sekundärseitigen Sternschaltung und den Eingangsgrößen der primärseitigen Dreieckschaltung für den idealisierten Fall wiedergibt, daß der Transformator induktionslos ist und seine Induktivitäten den Induktivitäten des Filters so zugerechnet werden, daß die durch die Primärströme hervorgerufenen induktiven Spannungsabfälle allein an den Induktivitäten XA, XB, XC auftreten.

Das Modell E bildet also letztlich nur die "galvanische Struktur" nach, die sich unter Berücksichtigung der Windungszahlen aus den Gleichungen für die elektrischen Größen an den galvanischen Knotenpunkten der Transformationseinrichtung ergibt, und liefert z.B. verkettete Ersatz-Meßgrößen UAB, UBC, UCA für die verketteten Spannungen am null-leiterfreien Modell-Eingang A, B, C, des als induktionslos angenommenen Modell-Transformators. Die mit den Induktivitäten des Transformators ("induktive Struktur") und den Filterinduktivitäten verbundenen induktiven Bealstungen erscheinen dann als induktive Spannungsabfälle an den Induktivitäten XA, XB, XC, d.h. als lastabhängige Spannungsdifferenzen UA' - UA, UB' - UB, UC' - UC zwischen den auf den fiktiven, freien Sternpunkt M des Wechselrichters bezogenen Spannungen an den Wechselrichterausgängen A', B', C' einerseits und Ersatz-Meßgrößem UA, UB, UC andererseits, die die Modell-Spannungen an den Modell-Anschlüssen A, B, C des induktionslosen Modell-Transformators angeben, bezogen auf den fiktiven Sternpunkt M.

Das Bauteil E stellt somit ein Entkopplungsnetzwerk dar, das es gestattet, die sekundärseitig mit dem belastbaren Sternpunkt verknüpften Meßgrößen in Ersatz-Meßgrößen eines null-leiterfreien Systems umzurechnen. Dieses Entkopplungsnetzwerk ist somit zwar von den Induktivitätsparametern des Transformators unabhäng, hat jedoch die Schaltungsstruktur der Spannungstransformationseinrichtung zu berücksichtigen und ist in seinem Aufbau für den betrachteten Dreieck-Stern-Transformator anders als z.B. für einen Transformator, der primärseitig einen freien Sternpunkt aufweist.

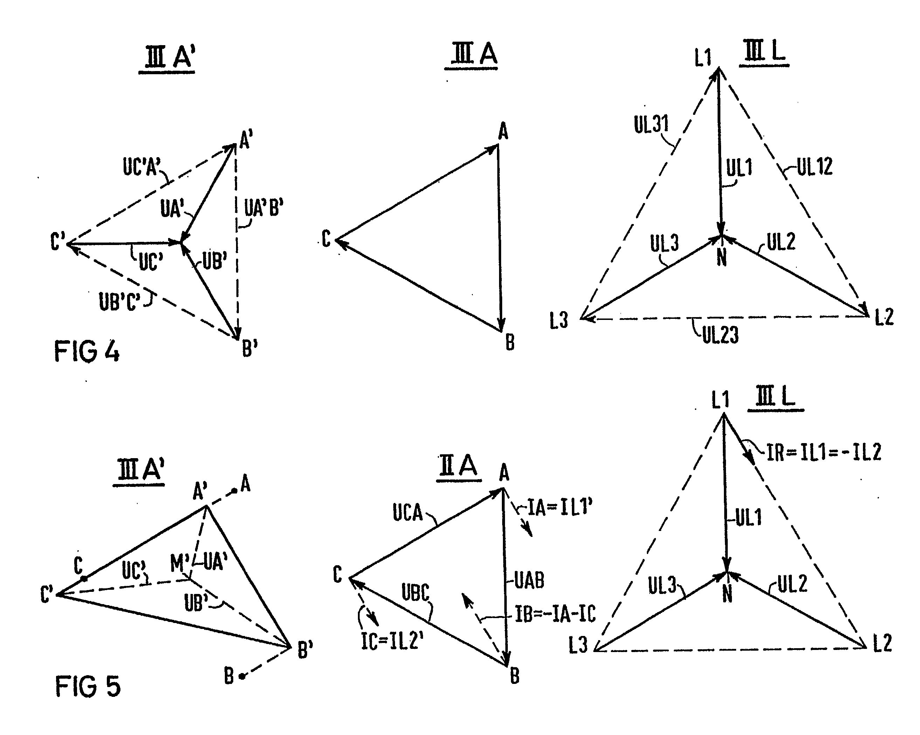

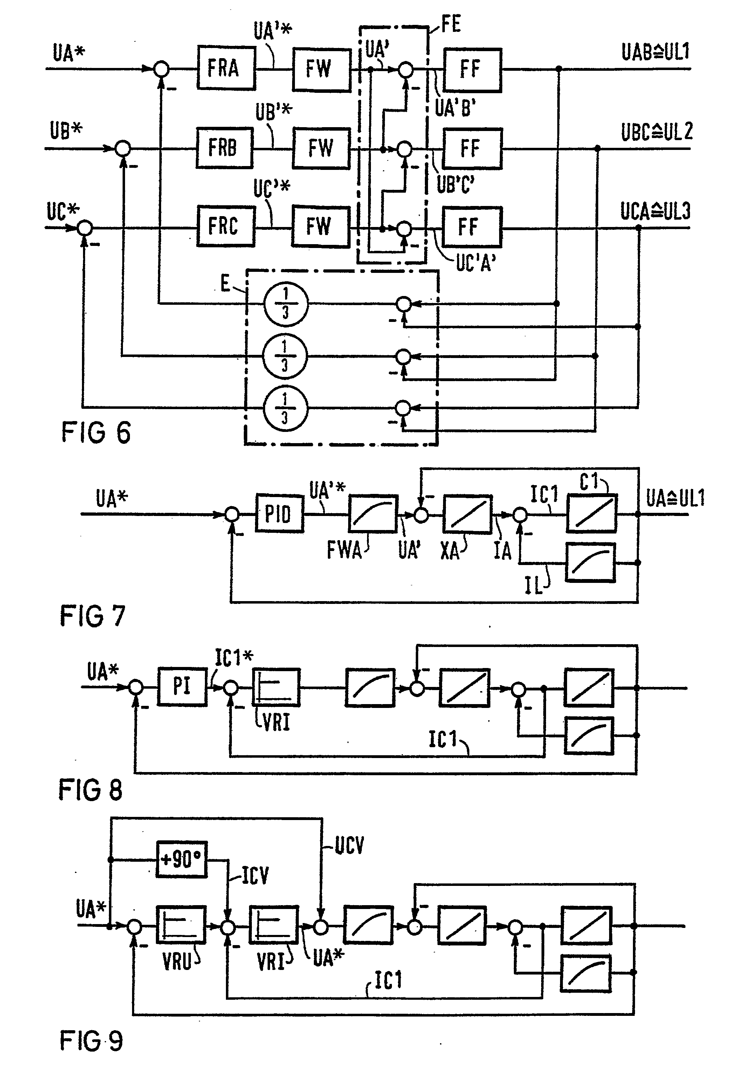

Stellt man gemäß der tatsächlichen Anordnung nach Fig. 2 in verschiedenen Spannungsebenen die tatsächlichen Spannungen an den Wechselrichter-Ausgängen A', B', C' als Spannungssystem IIIA', bzw. an den Klemmen L1, L2, L3, N als Ausgangsspannungssystem IIIL und an den Anschlüssen der Transformationseinrichtung als Spannungssystem IIIA dar, so müssen bei dem Ersatzschaltbild gemäß Fig. 3 die Spannungssysteme IIIA' und IIIL als tatsächliche Istwerte erhalten bleiben, jedoch wird das Spannungssystem IIIA ersetzt durch das von dem Entkopplungsnetzwerk E errechnete Ersatz-Spannungssystem IIA in einer (der Messung nicht zugänglichen, fiktiven) Spannungsebene. Ist das Spannungssystem IIIL symmetrisch, so ist auch IIA symmetrisch und umgekehrt. Durch momentane Laständerungen hervorgerufene Verzerrungen der Symmetrie in IIIL treten dabei auch als Verzerrungen im Spannungssystem IIA auf. Dies wird anhand der Fig. 4 und 5 deutlich.

In Fig. 4 ist zunächst eine symmetrische Belastung angenommen. Bezüglich des fiktiven Nullpunkts M der Eingangsgleichspannung prägt die Wechselrichteranordnung die symmetrischen Leiterspannungen UA', UB', UC' ein. Dies führt in der Spannungsebene IIIA' zu den symmetrischen verketteten Spannungen UA'B', UB'C', UC'A', die infolge der angenommenen symmetrischen Last an den Eingangsklemmen des Transformators zu dem ebenfalls symmetrischen System IIIA der verketteten Spannungen führt. In der Spannungsebene IIIL führen die symmetrischen Primärströme IL1, IL2, IL3 zu sekundärseitigen Leiterspannungen UL1, UL2, UL3 bzw. den verketteten Spannungen UL12, UL23, UL31, wobei hier ein Windungsverhältnis 1:1 angenommen ist. Das System IIIL ist symmetrisch.

Wird nun zwischen die Klemmen L1 und L2 die Last R mit dem Laststrom IR angelegt und gleichzeitig durch die Steuerung der Wechselrichteanordnung das Spannungssystem IIIL symmetrisch gehalten, so bleibt die Spannungsebene IIIL entsprechend Fig. 5 unverändert. Der Laststrom IR ist als Pfeil in Richtung der verketteten Spannung UL12 dargestellt. Entsprechend dem Ersatzschaltbild nach Fig. 3 und der daraus folgenden Berechnung der Ersatz-Istwerte bleibt dabei auch das System IIA symmetrisch; andernfalls wäre dem erfindungsgemäßen Verfahren die Basis entzogen.

Die bereits erläuterte Umrechnung der Ströme ergibt jedoch nunmehr die in Fig. 5 in der Spannungsebene IIA angegebenen Pfeile für die Ausgangsströme IA, IB, IC der Wechselrichteranordnung. Diese Ströme können nur fließen, wenn an den Impedanzen XA, XB, XC der Fig. 3 Spannungsabfälle auftreten, die durch die Abstände A'A, B'B, C'C im Spannungssystem IIIA'der Fig. 5 dargestellt sind. Die auf den fiktiven Nullpunkt M' der Eingangsgleichspannung bezogenen Spannungen UA', UB', UC' stellen somit ein unsymmetrisches System dar. Für die Wechselrichteranordnung bedeutet dies, daß an ihren Wechselstromausgängen durch Vorgabe eines unsymmetrischen Systems von Stellgrößen ein unsymmetrisches Spannungssystem erzeugt werden muß, damit entsprechend der jeweils vorliegenden Lastverteilung in den Ebenen IIA und IIIL ein symmetrisches Spannungssystem auftreten kann.

Zu diesem Zweck sieht das durch die Erfindung geschaffene Verfahren vor: Das Entkopplungsnetzwerk E, das die Struktur der Spannungstransformationseinrichtung simuliert, bildet aus Momentanwerten, die den Leiterspannungen UL1, UL2, UL3 am Ausgang der Spannungstransformationseinrichtung TR entsprechen, zunächst simulierte Momentanwerte (UA, UB, UC in Fig. 1). Dadurch stehen Ersatz-Istwerte eines (fiktiven) Spannungssystem IIA am Eingang der (idealisierten) Spannungstransformationseinrichtung für die Regelung bereit. Die Abweichung jedes Ersatz-Istwertes von einem durch ein symmetrisches Sollwertsystem vorgegebenen Sollwert kann nun jeweils von einer eigenen Regeleinrichtung ausgeregelt werden, die das dem Ersatz-Istwert zugeordnete Brückenzweig-Paar des verwendeten B6-Pulsumrichters steuert.

Die dabei gebildeten Steuerspannungen UA'*, UB'*, UC'* sind dann unsymmetrisch und führen zu den in Fig. 5 gezeigten Spannungen UA', UB', UC'. Die gleiche unsymmetrische Steuerung der Regeleinrichtungen wird aber auch erreicht, wenn die Entkopplung nicht zwischen den Meßgliedern für die tatsächlichen Istwerte UL1, UL2, UL3 und dem Istwerteingang der Regeleinrichtungen angeordnet ist, sondern wenn zunächst symmetrische Sollwerte unmittelbar für die Leiterspannungen (oder auch die verketteten Spannungen) in der Spannungsebene IIIL vorgegeben werden und erst anschließend die aus den Regelvergleich entstehenden Regler-Ausgangsgrößen im Entkopplungsnetzwerk E in die entsprechenden Steuerspannungen UA'*, UB'*, UC'* umgerechnet werden.

Bei der Betrachtung der Fig. 5 ergibt sich, daß bei einem angenommenen Windungsverhältnis 1:1 des Transformators gilt UAB = UL1, UBC = UL2. Für die fiktive Klemme A ist dann die Klemmenspannung bezüglich des fiktiven Nullpunkts des Systems IIA durch UA=1/3 (UL1 - UL2) = 1/3 (UAB - UBC) gegeben. Dieser Ersatz-Istwert kann demnach am Eingang eines Reglers RA mit einem entsprechenden Sollwert UA* verglichen werden, um mit der Reglerausgangsspannung UA'* den Komparator CPA für das Brückenzweig-Paar WA zu speisen (Fig. 1). Entsprechendes gilt für die anderen Brückenzweig-Paare WB, WC der Fig. 1, wobei die Sollwerte UA*, UB*, UC* von einem Sollwertgeber SG als symmetrisches System vorgegeben werden. Es ergibt sich also die in Fig. 1 angegebene Struktur des Entkopplungsnetzwerkes E und des Regelteils PR. Die Regler RA, RB, RC sind bei der in Fig. 1 gezeigten ersten Ausführungsform des Regelteiles PR als differenzierender Regler mit Proportional- und Integral-Anteil (PID-Regler) ausgebildet.

Die günstigste Dimensionierung der Regler ergibt sich aus der Forderung nach einer möglichst exakten und raschen Regelung und kann aus der Struktur der gesamten Vorrichtung abgeleitet werden.

Fig. 6 zeigt die Struktur der Regelung für alle drei Phasen, wobei mit FRA, FRB, FRC die Übertragungsfunktion der jeweiligen Regeleinrichtung, mit FWA, FWB, FWC die Übertragungsfunktion der Brückenzweig-Paare WA, WB, WC bezeichnet ist. Die Spannungstransformationseinrichtung RT ist durch ein Koppel-Netzwerk FE dargestellt, wobei der Einfluß des Filters und der Transformatoren-Induktivitäten durch eine entsprechende Übertragungsfunktion FF berücksichtigt ist.

Da der Einfluß des Kopplungsnetzwerkes FE durch das Entkopplungsnetzwerk E aufgehoben wird, können die Regelvorgänge für die einzelnen Brückenzweig-Paare entflochten werden. In Fig. 7 ist das Brückenzweig-Paar FWA als ein Glättungsglied erster Ordnung angenommen, an dessen Ausgang die Spannung UA' ansteht. Entsprechend Fig. 3 ist die Induktivität XA als Integrator für den induktiven Spannungsabfall UA' - UA dargestellt. Der dadurch gebildete Strom IA fließt teilweise als Laststrom IL in die Last, die näherungsweise durch ein Glättungsglied wiedergegeben wird. Der durch den Kondensator C1 fliessende Strom IC = IA - IL führt dann entsprechend einem Integrationsvorgang zur Spannung UL1, die der Spannung UA entspricht.

Die Stabilität dieses Regelkreises erfodert, daß als Regler PID ein differenzierender Regler eingesetzt wird, dem ein P-Anteil und zur Erhöhung der Genauigkeit vorteilhaft auch ein I-Anteil zugefügt wird, um den Istwert UL1 entsprechend dem Sollwert UA* zu regeln.

Die Verwendung eines Reglers mit D-Anteil ist nicht immer vorteilhaft. Da aber der Kondensatorstrom IC1 als Eingangsgröße von C1 das Differential der Spannung UL1 darstellt, kann der D-Anteil des Regelkreises dadurch realisiert werden, daß die Differenz UA* - UA einem Spannungsregler PI ohne D-Anteil zugeführt wird, dessen Ausgangssignal der Meßwert des Kondensatorstromes IC1 aufgeschaltet wird. Das Ausgangssignal des Spannungsreglers gibt dann den Sollwert IC1* des Kondensatorstromes an (Fig. 8) und die Regelabweichung IC1* - IC1 kann von einem unerlagerten Stromregler, der ein reines Verstärkungsglied VRI (Proportionalregler) sein kann, ausgeregelt.

Das Verhalten der Regelkreise nach Fig. 7 und 8 ist nahezu identisch.

Der absolute Fehler der Regelung kann noch weiter verringert werden, wenn das Ausgangssignal des Spannungsreglers sowohl mit dem Kondensatorstrom wie auch mit der Kondensatorspannung vorgesteuert wird. Gemäß der vorteilhaften Struktur nach Fig. 9 wird als Spannungsregler ein Proportionalsregler VRU verwendet, zu dessen Ausgangssignal ein Vorsteuerwert ICV für den Kondensatorstrom addiert wird. Beim Nennwert $U_N$ der Ausgangsspannung mit der Frequenz $\omega_0$ fließt über den Kondensator der Kapazität C ein der Spannung um 90° voreilender Nennstrom $\omega_0$ C.$U_N$. Für den vorliegenden Ist- oder Sollwert der Spannung kann daher ein dem Sollwert UA* entsprechend voreilender Vorsteuerwert ICV gebildet werden, dessen Amplitude z.B. durch $\omega_0$ C.UA* vorgegeben wird. Als Vorsteuergröße UCV für die Kondensatorspannung kann direkt der Spannungssollwert UA* auf die vom Stromregler VRI gebildete Steuerspannung UA'* geschaltet werden.

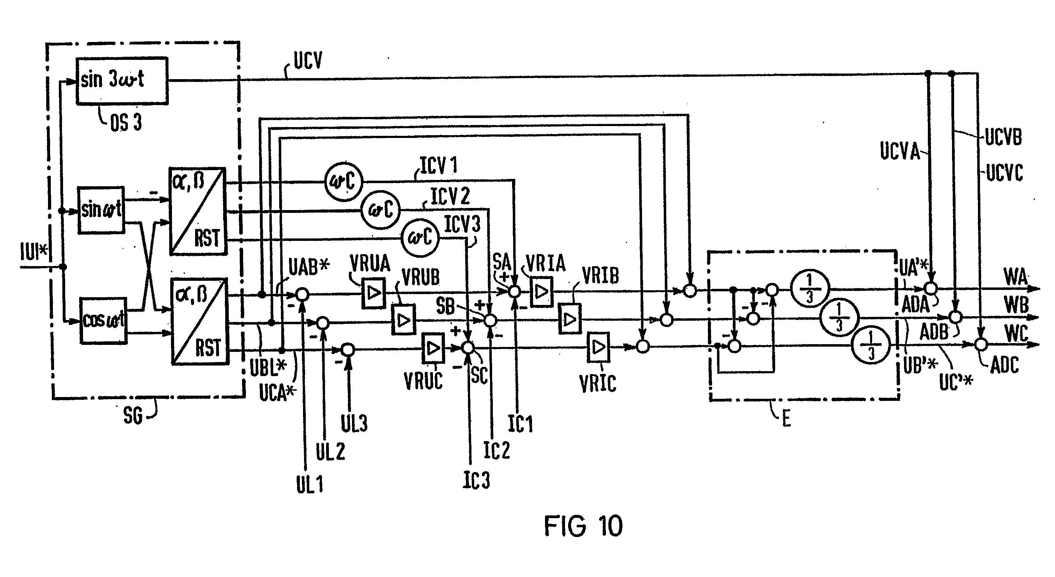

In Fig. 10 ist ein vorteilhafter, gegenüber dem in Fig. 1 gezeigten Regelteil PR veränderter Regelteil dargestellt, der sich aus den Einzelphasen-Regelkreisen der Fig. 9 ergibt. Der Sollwertgeber SG besteht demnach aus zwei Oszillatoren, die zwei um 90° phasenversetzte Schwingungen mit der gewünschten Frequenz des Ausgangsspannungssystems und der Amplitude U* erzeugen. Zwei dadurch gebildete Zahlenpaare (U*cos $\omega t$, U*sin $\omega t$) und (-U*sin $\omega t$, U*cos $\omega t$) werden als die Orthogonalkomponenten eines ersten Sollvektors und eines demgegenüber um 90° voreilenden zweiten Sollvektors aufgefaßt, aus denen dann jeweils ein $\alpha$, $\beta$/RST-Koordinatenwandler die Projektionen auf drei gegeneinander um 120° phasenversetzte Achsen bildet.

Die Projektionen des ersten Vektors ergeben dabei Sollwerte UAB*, UBC*, UCA*, die somit ein symmetrisches Sollwertsystem darstellen. Die Regelabweichungen der momentanen Istwerte UL1, UL2, UL3 von diesen Sollwerten werden in den Spannungsreglern VRUA, VRUB, VRUC verstärkt und Subtraktionsstellen SA, SB, SC zugeführt. Diesen Subtraktionsstellen sind einerseits jeweils die bereits nach Fig. 2 erfaßten Meßwerte der Kondensatorströme IC1, IC2, IC3, andererseits aber auch die entsprechenden Vorsteuerwerte ICV1, ICV2, ICV3 zugeführt, die durch Multiplikation aus den Projektionen des anderen Sollvektors gebildet sind. Die dadurch erhaltenen Subtraktionssignale werden in den Stromreglern VRIA, VRIB, VRIC zu Steuergrößen für die Wechselrichter-Ausgangsspannung verstärkt, zu denen in anschließenden Additionsstellen die Spannungssollwerte UAB*, UBC*, UCA* als Vorsteuergrößen UCV addiert werden.

Abweichend vom Regelteil PR der Fig. 1 ist bei der Fig. 10 die Spannungs-Regelung für das Steuerspannungssystem IIIL vorgesehen. Das Entkopplungsnetzwerk E ist dabei nicht von dem Istwert-System IIIL, sondern vom System der vorgesteuerten Steuergrößen gespeichert. Es besitzt zwar den bereits in Fig. 1 angegebenen Aufbau, ist aber anstelle im Istwert-Kanal des Regelteiles PR jetzt im Stellgrößenkanal für die Stellgrößen UA', UB', UC' angeordnet. Seine Ausgangsgrößen UA'*, UB'*, UC'* sind als Steuerspannungen für diese Stellgrößen den Steuersätzen der Brückenzweig-Paare WA, WB, WC zugeführt.

Der gesamte weitere Teil der Vorrichtung kann unverändert aus Fig. 1 übernommen werden.

Vorteilhaft ist noch vorgesehen, den Steuerspannungen für die Brückenzweig-Paare, die im stationären Fall sinusförmig sind, zur Annäherung an eine Trapezform eine auf das Signal U* sin $\omega t$ synchronisierte Oberschwingung dritter Ordnung zu überlagern. Der Sollwertgeber SG enthält daher einen weiteren Oszillator OS3 mit dreifacher Frequenz, dessen Ausgangssignal den Ausgängen UA'*, UB'*, UC'* des Entkopplungsnetzwerkes E addiert aufgeschaltet ist.

Die synchronisierte, überlagerte, dritte Oberschwingung verändert die Amplitude der als Stellgrößen verwendeten Wechselrichter-Ausgangsspannungen nicht; sie erzeugt aber in den Transformatorwicklungen Ströme, die diese dritte Oberwelle nicht aufweisen und eine entsprechend höhere Amplitude besitzen. Dadurch kann der Wirkungsgrad der Leistungsübertragung in der Wechselrichteranordnung gesteigert werden.

Die Erfindung kann z.B. dazu verwendet werden, bei einer unterbrechungsfreien Stromversorgung die sichere Schiene aus einer Batterie zu speisen, oder um aus einem Solargenerator, einer Brennstoffzelle oder einer anderen Gleichspannungsquelle in ein Inselnetz einzuspeisen. Da die Erfindung von Momentanwerten ausgeht, die praktisch verzögerungsfrei in die Ersatz-Istwerke umgerechnet werden, ist somit eine sehr rasche Istwert-Regelung möglich, durch die nicht nur ein symmetrisches Netz auch bei unsymmetrischer Belastung sichergestellt wird, sondern auch Laststöße mit Ausregelzeiten ausgeregelt werden, die unterhalb einer Halbperiode der Schwingung liegen. Als Filterelemente können insbesondere einfache Tiefpässe verwendet werden, durch die trotzdem der Oberschwingungsgehalt unter 5% gedrückt werden kann.

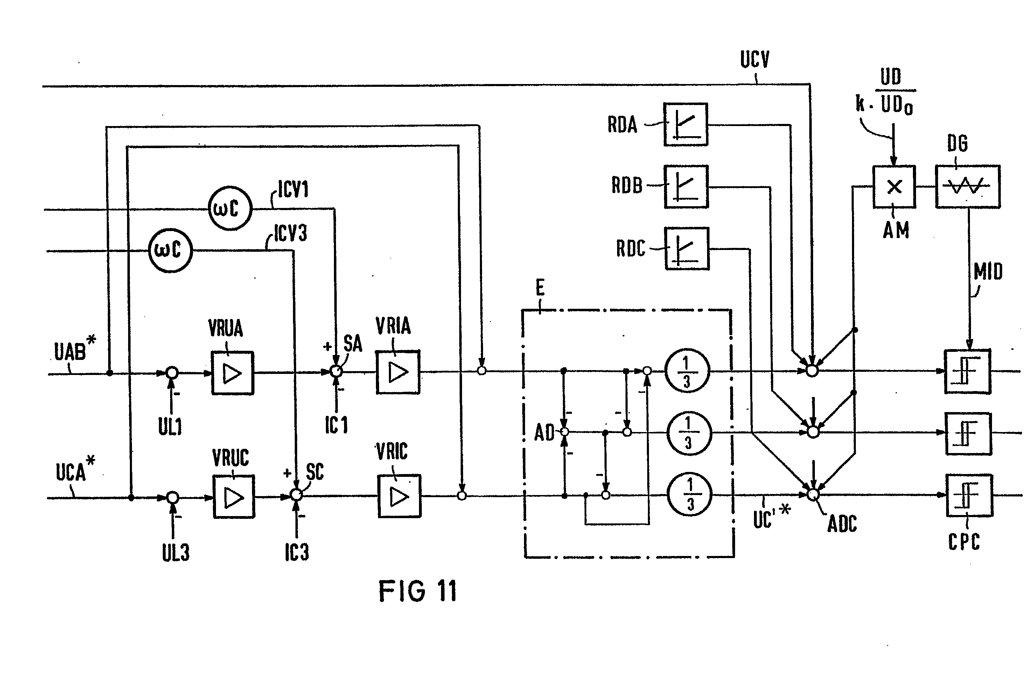

Eine vorteilhafte Weiterbildung der Erfindung zeigt Fig. 11, bei der vom Sollwertgeber nur zwei das symmetrische Sollwertsystem beschreibende Sollwerte erzeugt werden. Gegenüber Fig. 10 sind z.B. der Sollwert UBC*, dessen zugehöriger momentane Istwert UL2 sowie die aus den Reglern SB und VRIB bestehende Regeleinrichtung mit der Aufschaltung von IC2 und ICV2 weggelassen. Die den beiden anderen Sollwerten UAB* und UCA* zugeordneten Regeleinrichtungen können unverändert bleiben und liefern zwei Ausgangsgrößen, aus denen mittels der Additionsstelle AD nunmehr die zu der weggelassenen Regeleinrichtung gehörende Ausgangsgröße rechnerisch ermittelt wird.

Genauso ist es auch bei der Anordnung nach Fig. 1 möglich, am Entkopplungsnetzwerk E nur zwei simulierte Momentanwerte abzugreifen und nur mittels zweier Regler auf entsprechende, ein symmetrisches System beschreibende Sollwerte auszuregeln. Auch dabei werden dann aus den beiden Reglerausgangsgrößen die Steuergröße für die drei Steuersätze und Brückenzweigpaare WA, WB und WC ermittelt.

Diese Variante beruht darauf, daß ein symmetrisches System nur zwei Freiheitsgrade hat und auch der Brükken-Pulsumrichter nur zwei Spannungen, z.B. die verketteten Spannungen UA'B', UC'A' zu stellen vermag, da die Summe der drei verketteten Spannungen gleich Null (bzw. die Summe der Leiterspannungen gleich dem fiktiven Nullpunkt M) ist.

In Fig. 11 ist ferner eine vorteilhafte Weiterbildung der Steuersätze CPA, CPB und CPC der Fig. 1 dargestellt. Dem als Komparator dargestellten Steuersatz CPC ist eine Additionsstelle ADC vorgeschaltet, der einerseits die durch Regelung und Entkopplung gebildete Steuergröße UC'*, andererseits der Ausgang des Gleichanteilreglers RDC sowie die zur dritten Harmonischen gehörende Vorsteuerspannung UCV gemäß den Figuren 1 und 10 aufgeschaltet ist. Zur Abtastung der damit gebildeten Steuerspannung des Steuersatzes CPC wird eine Dreieckspannung verwendet, die der tatsächlichen Eingangsgleichspannung UD des Wechselrichters nachgeführt ist. Um nämlich den auszuregelnden Fehler so gering wie möglich zu halten, soll die Modulation so eingestellt werden, daß der Betrag des Sollwertsystems und der Meßwert der Ausgangsspannung möglichst gleich sind. Durch eine geeignet gewählte Konstante k läßt sich die Amplitude des Dreiecksgenerators DG so einstellen, daß diese Forderung für den Nennwert UDo der Eingangsgleichspannung erfüllt ist. Ist aber die Eingangsgleichspannung nicht konstant, wie dies z.B. für Batterien gilt, so kann die Amplitude der Abtastspannung an die jeweils gemessene Batteriespannung UD angepaßt werden (Multiplizierer AM).

Durch eine Signalleitung MID zu jedem einzelnen Steuersatz ist angedeutet, daß der Dreiecksgenerator DG bei jedem Umschaltpunkt des Abtastdreiecks (d.h. jeweils bei den Extremalwerten der Abtastspannung) für eine gesteuert vorgegebene Dauer einen Mindesteinschaltimpuls abgibt, der sicherstellt, daß innerhalb jeder Modulationsperiode jedes Halbleiterventil für eine bestimmte Mindestdauer gezündet ist. Bei Wechselrichterschaltungen mit kleinem Innenwiderstand kann nämlich eine Übersteuerung, bei der die abzutastende Steuerspannung größer als die Abtastspannung ist, einen sehr hohen Strom in den Halbleitern hervorrufen. Zur Entlastung der Halbleiterventile ist daher wenigstens eine Umschaltung der Ventile pro Taktperiode vorgesehen.

In Fig. 11 nicht näher dargestellt ist eine Ansteuerlogik, bei der bei einem dem jeweiligen Steuersatz zugeordneten Überstrom-Eingriffsbefehl zwischen den beiden Ventilen des betreffenden Brückenzweig-Paares für eine vorgegebene, konstante Eingriffszeit umgeschaltet wird. Dieser Überstrom-Eingriffsbefehl, der jeweils unabhängig von dem Einschaltzustand der anderen Brückenzweig-Paare erfolgt, wird jeweils von einer eigenen, dem entsprechenden Ausgang zugeordneten Überwachungsschaltung geliefert, sobald der Strom in diesem Phasenausgang einen vorgegebenen Höchstwert überschreitet.

Dadurch können Spitzenströme rasch abgebaut werden, wie dies im Zusammenhang mit einem Rundsteuersender in der deutschen Offenlegungsschrift 3 008 480 beschrieben ist.

Die Erfindung ermöglicht somit ein Verbrauchersystem, das in beliebiger Weise zwischen den Phasen und dem Nulleiter einer Spannungsversorgung geschaltet ist, ein symmetrisches Spannungssystem einzuspeisen.

**Patentansprüche**

1. Vorrichtung zur Erzeugung eines symmetrischen dreiphasigen Ausgangsspannungssystems ((UL1, UL2, UL3) mit belastbarem Null-Leiter (N), mit

a) einer drei Wechselstromausgänge (A', B', C') enthaltenden Wechselrichteranordnung (WA, WB, WC),

b) einer primärseitig an die Wechselrichteranordnung angeschlossenen Spannungstransformationseinrichtung (TR), insbesondere einem potentialfreien Drehspannungstransformator mit sekundärseitiger Sternpunktschaltung oder einem Sternpunktbildner, zur Bildung des Ausgangssystems mit Null-Leiter,

c) einem mit der Spannungstranformations-Einrichtung in Reihe geschalteten Filter (LA, LB, LC, C1, C2 und C3) und

d) einem Sollwertgeber (SG) zur Vorgabe von drei symmetrischen Sollwerten (UA*, UB*, UC*) und je einer einem Sollwert und einem Wechselstromausgang der Wechselrichteranordnung zugeordneten Regeleinrichtung (RA, RB, RC) mit nachgeschaltetem Steuersatz, gekennzeichnet durch folgende Merkmale:

e) die Wechselrichteranordnung ist ein pulsbreitengesteuerter, 3-phasiger Brücken-Umrichter,

f) ein die Struktur der Spannungstransformationseinrichtung (TR) abbildendes Entkopplungsnetzwerk (E) bildet aus Momentanwerten, die den Leiterspannungen (UL1, UL2, UL3) am Ausgang der Reihenschaltung entsprechen, transformierte Momentanwerte (UA, UB, UC) die einem Spannungssystem am Eingang der Spannungstransformationseinrichtung entsprechen, und

g) die Regeleinrichtung und das Entkopplungsnetzwerk sind derart zusammengeschaltet, daß sie aus den Sollwerten und aus Meßwerten für die Leiterspannung des Ausgangsspannungssystems Steuerspannungen für die auf jeweils einen Ausgang der Wechselrichteranordnung arbeitenden Brückenzweig-Paare liefern, wobei mit den Steuerspannungen die Abweichung der transformierten Meßwerte von den Sollwerten ausregelbar ist (Fig. 1).

2. Vorrichtung nach Anspruch 1, dadurch gekennzeichnet, daß die Regeleinrichtungen von Soll/Istwert-Differenzen beaufschlagt und das Entkopplungsnetzwerk zwischen den Regeleinrichtungen und ihren Steuersätzen angeordnet ist (Fig. 10).

3. Vorrichtung nach Anspruch 1 oder 2, gekennzeichnet dadurch, daß die Filter als Tiefpaßfilter ausgebildet sind.

4. Vorrichtung nach einem der Ansprüche 1 bis 3, dadurch gekennzeichnet, daß den Stellengrößen für die Ausgangsspannungen der Brückenzweig-Paare eine Oberschwingung dritter Ordnung zur Annäherung an eine Trapezform überlagert ist.

5. Vorrichtung nach einem der Ansprüche 1 bis 4, dadurch gekennzeichnet, daß die Soll/Istwert-Differenzen in jeder Regeleinrichtung einem PID-Regler aufgeschaltet sind.

6. Vorrichtung nach einem der Ansprüche 1 bis 4, dadurch gekennzeichnet, daß die Soll/Istwert-Regeldifferenzen in jeder Regeleinrichtung einem überlagerten P- oder PI-Regler aufgeschaltet sind, dessen Ausgangssignal als Sollwert für einen Kondensatorstrom mit einem an den Kondensator abgegriffenen Istwert verglichen und einem unterlagerten Stromregler vorzugsweise einem Proportionalregler zugeführt wird (Fig. 8).

7. Vorrichtung nach Anspruch 6, dadurch gekennzeichnet, daß dem überlagerten Regler, vorzugsweise einem überlagerten P-Regler (VRU), eine aus seinem Sollwert gebildete, um 90° phasenverschobene Vorsteuergröße an seinem Ausgang aufgeschaltet ist (Fig. 9).

8. Vorrichtung nach einem der Ansprüche 6 oder 7, dadurch gekennzeichnet, daß aus dem Sollwert des überlagerten Reglers, vorzugsweise eines überlagerten P-Reglers (VRU), ein Vorsteuerwert (UCV) abgeleitet ist, der dem Ausgangssignal des unterlagerten Reglers (VRI) aufgeschaltet ist (Fig. 9).

9. Vorrichtung nach einem der Ansprüche 1 bis 8, dadurch gekennzeichnet, daß am Sollwertgeber nur zwei ein symmetrisches Sollwertsystem beschreibende Sollwerte abgegriffen werden, denen jeweils eine Regeleinrichtung zugeordnet ist, und daß aus den Ausgangsgrößen der Regeleinrichtungen die Steuerspannungen für alle Steuersätze bestimmt werden.

10. Vorrichtung nach einem der Ansprüche 1 bis 9, dadurch gekennzeichnet, daß die Steuerspannungen der Steuersätze mit einer Abtastspannung abgetastet werden, deren Amplitude der Eingangsgleichspannung des Wechselrichters nachgeführt ist.

11. Vorrichtung nach einem der Ansprüche 1 bis 10, dadurch gekennzeichnet, daß innerhalb jeder Modulation-Taktperiode jedes Ventil eines Brückenzweigpaares ein- und ausgeschaltet wird.

12. Vorrichtung nach Anspruch 11, dadurch gekennzeichnet, daß an den Umschaltpunkten der Abtastspannung ein Mindesteinschaltimpuls mit einer gesteuert vorgegebenen Mindestdauer zur Einschaltung der Ventile abgegeben wird.

13. Vorrichtung nach einem der Ansprüche 1 bis 12, dadurch gekennzeichnet, daß der Phasenstrom an jedem Wechselrichterausgang getrennt auf Überschreitung eines Maximalwertes überwacht wird, daß bei jedem Überschreiten ein dem jeweiligen Ausgang zugeordneter Eingriffsbefehl nur die Phasenspannung dieses Wechselrichterausgangs durch vorübergehende Umschaltung zwischen den Ventilen für eine konstant vorgegebene Dauer umgepolt wird.

## Claims

1. Arrangement for producing a symmetrical three-phase output voltage system ((UL1, UL2, UL3) with loadable neutral conductor (N), having

a) an inverter arrangement (WA, WB, WC) which contains three alternating current outputs (A', B', C'),

b) a voltage transformation device (TR), which is connected on the primary side to the inverter arrangement, more particularly a potential-free rotary voltage transformer with star point circuit on the secondary side or a star point former, for the purpose of forming the output system with neutral conductor,

c) a filter (LA, LB, LC, C1, C2, C3) connected in series with the voltage transformation device and

d) a desired value generator (SG) for inputting three symmetrical desired values (UA*, UB*, UC*) and a respective regulating device (RA, RB, RC), which is associated with a desired value and an alternating current output of the inverter arrangement, with subsequently connected control set, characterised by the following features:

e) the inverter arrangement is a pulse width-controlled, 3-phase bridge converter,

f) a decoupling network (E), which imitates the structure of the voltage transformation device (TR), forms from instantaneous values, which correspond to the conductor voltages (UL1, UL2, UL3) at the output of the series connection, transformed instantaneous values (UA, UB, UC) which correspond to a voltage system at the input of the voltage transformation device, and the regulating device and the decoupling network are connected together in such a way that they supply fron the desired values and from measured values for the conductor voltages of the output voltage system control voltages for the bridge branch pairs operating, in each case, into an output of the inverter arrangement, it being possible to adjust the deviation of the transformed measured values from the desired values with the control voltages (Figure 1).

2. Arrangement according to claim 1, characterised in that desired/actual value differences act upon the regulating devices and the decoupling network is arranged between the regulating devices and their control sets (Figure 10).

3. Arrangement according to claim 1 or 2, characterised in that the filters are formed as lowpass filters.

4. Arrangement according to one of the claims 1 to 3, characterised in that a harmonic oscillation of third order is superimposed upon the correcting variables for the output voltages of the bridge branch pairs for the purpose of approximating a trapezoidal form.

5. Arrangement according to one of the claims 1 to 4, characterised in that the desired/actual value regulation differences in each regulating device are applied to a PID-regulator.

6. Arrangement according to one of the claims 1 to 4, characterised in that the desired/actual value regulation differences in each regulating device are applied to a superimposed P- or PI-regulator, the output signal of which as a desired value for a capacitor current is compared with an actual value picked off at the capacitor and supplied to a subordinate current regulator, preferably a proportional regulator (Figure 8).

7. Arrangement according to claim 6, characterised in that to the superimposed regulator, preferably a superimposed P-regulator (VRU), there is applied at its output a pre-control variable which is formed from its desired value and is phase-shifted by 90° (Figure 9).

8. Arrangement according to one of the claims 6 or 7, characterised in that derived from the desired value of the superimposed regulator, preferably a superimposed P-regulator (VRU), there is a pre-control value (UCV) which is applied to the output signal of the subordinate regulator (VRI) (Figure 9).

9. Arrangement according to one of the claims 1 to 8, characterised in that there are picked off at the desired value generator only two desired values which describe a symmectrical desired value system and with which there is associated in each case a regulating device and in that the control voltage for all control sets are determined from the output variables of the regulating devices.

10. Arrangement according to one of the claims 1 to 9, characterised in that the control voltages of the control sets are scanned with a scanning voltage, the amplitude of which is tracked to the input direct voltage of the inverter.

11. Arrangement according to one of the claims 1 to 10, characterised in that within each modulation clock period each valve of a bridge branch pair is switched on and off.

12. Arrangement according to claim 11, characterised in that there is emitted at the change-over points of the scanning voltage a minimum switch-on impulse with a minimum period, which is preset in a controlled manner, for switching on the valves.

13. Arrangement according to one of the claims 1 to 12, characterised in that the phase current is monitored separately at each inverter output for exceeding a maximum value, in that in the case of each exceeding an intervention command, associated with the respective output, is produced and in that in the case of each intervention command only the phase voltage of this inverter output has its polarity reversed through transient change-over between the valves for a constant preset period.

**Revendications**

1. Dispositif pour l'obtention d'un système triphasé symétrique de tensions de sortie ((UL1, UL2, UL3) comportant un conducteur neutre (N) pouvant être chargé, et

a) un dispositif formant onduleur (WA, WB, WC) contenant trois sorties à courant alternatif (A', B', C'),

b) un dispositif de transformation de tension (TR) raccordé, côté primaire, au dispositif formant onduleur, notamment un transformateur de tension triphasée à potentiel libre comportant un circuit à neutre, situé du côté secondaire, ou un dispositif de formation de neutre, servant à former le système de sortie comportant un conducteur neutre,

c) un filtre (LA, LB, LC, C1, C2, C3) branché en série avec le dispositif de transformation de tension, et

d) un générateur (SG) de valeurs de consigne, servant à prédéterminer trois valeurs de consigne symétriques (UA*, UB*, UC*) et un dispositif respectif de régulation (RA, RB, RC), qui est associé à une sortie à courant alternatif du dispositif formant onduleur et en aval duquel est branchée une unité de commande, caractérisé par les particularités suivantes:

e) le dispositif formant onduleur est un mutateur en pont triphasé, commandé par les durées d'impulsions,

f) un réseau de découplage (E) formant l'image de la structure du dispositif de transformation de tension (TR) forme, à partir de valeurs instantanées, qui correspondent aux tensions (UL1, UL2, UL3) entre phases à la sortie du circuit série, des valeurs instantanées transformées (UA, UB, UC), qui correspondent à un système de tensions présent à l'entrée du dispositif de transformation de tension, et

g) le dispositif de régulation et le réseau de découplage sont interconnectés de manière à fournir, à partir des valeurs de consigne et à partir de valeurs de mesure pour les tensions entre phases du système de tensions de sortie, des tensions de commande pour les couples de branches du pont, qui opèrent respectivement sur une sortie du dispositif formant onduleur, l'écart entre les valeurs de mesure trans-formées et les valeurs de consigne pouvant être éliminé par réglage à l'aide des tensions de consigne (figure 1).

2. Dispositif suivant la revendication 1, caractérisé par le fait que les dispositifs de régulation sont chargés par des différences valeur de consigne/valeur réelle et que le réseau de découplage est disposé entre les dirspositifs de régulation et leurs unités de commande (figure 10).

3. Dispositif suivant la revendication 1 ou 2, caractérisé par le fait que les filtres sont réalisés sous la forme de filtres passe-bas.

4. Dispositif suivant l'une des revendications 1 à 3, caractérisé par le fait qu'aux grandeurs de réglage des tensions de sortie des couples de branches du pont est superposée une oscillation harmonique du troisième ordre pour l'obtention approchée d'une forme trapézoïdale.

5. Dispositif suivant l'une des revendications 1 à 4, caractérisé par le fait que les différences valeur de consigne/valeur réelle sont appliquées à un régulateur PID à action proportionnelle, intégrale et différentielle, dans chaque dispositif de régulation.

6. Dispositif suivant l'une des revendications 1 à 4, caractérisé par le fait que les différences de réglage valeur de consigne/valeur réelle sont envoyées, dans chaque dispositif de régulation, à un régulateur à action proportionnelle ou à un régulateur PI à action proportionnelle et intégrale, de rang supérieur, dont le signal est conparé, en tant que valeur de consigne d'un courant d'un condensateur, à une valeur réelle prélevée sur le condensateur, et est envoyé à un régulateur de courant subordonné, de préférence un régulateur à action proportionnelle (figure 8).

7. Dispositif suivant la revendication 6, caractérisé par le fait qu'à la sortie du régulateur de rang supérieur, de préférence un régulateur à action proportionnelle (VRU) de rang supérieur, est appliquée une grandeur de commande pilote, formée à partir de la valeur de consigne du régulateur et déphasée de 90° (figure 9).

8. Dispositif suivant l'une des revendications 6 ou 7, caractérisé par le fait qu'à partir de la valeur de consigne du régulateur de rang supérieur, de préférence un régulateur P à action proportionnelle (VRU) de rang supérieur, est dérivée une valeur de commande pilote (UCV), qui est ajoutée au signal de sortie du régulateur subordonné (VRI) (figure 9).

9. Dispositif suivant l'une des revendications 1 à 8, caractérisé par le fait que seules deux valeurs de consigne, qui décrivent un système symétrique de valeurs de consigne et auxquelles sont associés des dispositifs respectifs de régulation, sont prélevées du générateur de valeur de consigne et que les tensions de commande pour toutes les unités de commande sont déterminées à partir des grandeurs de sorties des dispositifs de régulation.

10. Dispositif suivant l'une des revendications 1 à 9, caractérisé par le fait que les tensions de commande des unités de commande sont explorées au moyen d'une tension d'échantillonnage, dont l'amplitude est asservie à la tension continue d'entrée de l'onduleur.

11. Dispositif suivant l'une des revendications 1 à 10, caractérisé par le fait que chaque valve d'un couple de branches du pont est branchée et déconnectée, au cours de chaque période de la cadence de modulation.

12. Dispositif suivant la revendication 11, caractérisé par le fait qu'une impulsion minimale de branchement, qui possède une durée minimale prédéterminée d'une manière commandée, est délivrée pour le branchement des valves, aux instants de commutation de la tension d'échantillonnage.

13. Dispositif suivant l'une des revendications 1 à 12, caractérisé par le fait qu'un contrôle du courant de phase est exécute séparément au niveau de chaque sortie de l'onduleur pour savoir si ce courant dépasse une valeur maximale et que, lors de chaque dépassement, un ordre d'intervention associé à la sortie respective est produit lors de chaque dépassement et que, pour chaque ordre d'intervention, seule la polarité de la tension de phase de cette sortie de l'onduleur est inversée, pendant une durée prédéterminée constante, au moyen d'une commutation transitoire entre les valves.

FIG 1

FIG 2

FIG 3

FIG 4

FIG 5

EP 0 208 088 B1

FIG 6

FIG 7

FIG 8

FIG 9

FIG 10

EP 0 208 088 B1

FIG 11

EP 0 208 088 B1